# EUROPÄISCHE PATENTSCHRIFT

(11) **EP 3 587 998 B1**
(45) Veröffentlichungstag und Bekanntmachung des Hinweises auf die Patenterteilung: **22.09.2021**
(21) Anmeldenummer: 19178947.8
(22) Anmeldetag: 07.06.2019
(51) Int. Cl.: G01B 11/245, A24C 5/34, G01B 11/10, G01N 21/952

(54) **VORRICHTUNG UND VERFAHREN ZUR OPTISCHEN MESSUNG AN EINEM PRODUKTSTRANG DER TABAK VERARBEITENDEN INDUSTRIE UND VERWENDUNG EINER OPTISCHEN MESSVORRICHTUNG**
DEVICE AND METHOD FOR OPTICAL MEASURING ON A STRAND OF PRODUCTS FOR THE TOBACCO PROCESSING INDUSTRY AND USE OF AN OPTICAL MEASURING DEVICE
DISPOSITIF ET PROCÉDÉ DE MESURE OPTIQUE D'UN BOUDIN DE PRODUIT DE L'INDUSTRIE DE TRAITEMENT DU TABAC ET UTILISATION D'UN DISPOSITIF DE MESURE OPTIQUE

(30) Priorität: 29.06.2018 DE 102018115753; 21.11.2018 DE 102018129256
(43) Veröffentlichungstag der Anmeldung: 01.01.2020
(73) Patentinhaber: Hauni Maschinenbau GmbH, 21033 Hamburg (DE)
(72) Erfinder: STRAUBE, Peter, 21035 Hamburg (DE); HROCH, Ronald, 22946 Trittau (DE); BEHNCKE, Hans-Hermann, 25451 Quickborn (DE); LOHSE, Stefan, 21514 Büchen (DE); EL JARAD, Akram, 21423 Winsen (DE)
(74) Vertreter: Müller Verweyen

(56) Entgegenhaltungen:
- DE-A1-102004 057 092
- DE-A1-102011 013 661
- DE-A1-102012 204 331
- US-A1- 2008 273 211

## Beschreibung

Die vorliegende Erfindung betrifft eine optische Messvorrichtung zur Ermittlung mindestens eines Merkmals, Qualitätswerts und/oder von Servicedaten eines endlos verarbeiteten Produktstrangs der Tabak verarbeitenden Industrie auf der Grundlage der Triangulation, umfassend mindestens eine Lichtquelle zur Erzeugung einer Mehrzahl von einfallenden Strahlengängen, die um den Umfang des Produktstrangs herum auf dessen Oberfläche fallen, mindestens drei lichtempfindliche Elemente, die relativ zu den einfallenden Strahlengängen in einer Triangulationsanordnung angeordnet sind, und eine digitale Auswerteeinrichtung, die zur Ermittlung eines 3-dimensionalen Oberflächenprofils des Produktstrangs aus den von den lichtempfindlichen Elementen übermittelten Messsignalen eingerichtet ist. Die Erfindung betrifft des Weiteren die Verwendung einer solchen optischen Messvorrichtung, und ein entsprechendes optisches Messverfahren.

Zur Ermittlung unter anderem des Durchmessers eines Tabakstrangs in einer Zigarettenherstellmaschine ist eine optische Messeinrichtung nach dem Schattenwurfprinzip aus der DE 103 04 503 A1 bekannt. Dabei laufen die Lichtquelle und der Sensor um den Tabakstrang herum, so dass sich aufgrund der Förderung des Tabakstrangs in der Strang- bzw. Förderrichtung eine Spiralbahn der Messposition entlang des Tabakstrangs ergibt. Diese bekannte optische Messeinrichtung weist bewegliche Teile auf und benötigt aufgrund des genutzten Messprinzips für die Ermittlung eines Profildurchmessers bis zu 12 m Stranglänge.

Aufgrund neuer Produkte und höherem Bedarf an Produktinformationen wird die Forderung gestellt, Strangprofile und somit unter anderem auch Durchmesserwerte in wesentlich kürzeren Abständen zu erhalten. Ein weiteres Ziel ist die Vermeidung von bewegten Teilen in der Messvorrichtung, um den Verschleiß zu verringern, und den Platzbedarf der Messvorrichtung zu verkleinern.

Nachdem der Endlosstrang die Messvorrichtung durchlaufen hat, wird er mittels eines Schneidapparats in gleichlange Stäbe geteilt. Jeder Stab kann in manchen Anwendungen aus unterschiedlichen Materialien segmentweise zusammengesetzt sein. Die durchlaufenden Segmente sind in Regel mit Umhüllungspapier geschlossen. Das Profil wird aber durch die innenliegenden Segmente ausgeprägt. Für jedes Segmentstück werden Qualitätsparameter, unter anderem Durchmesser, Ovalität etc., benötigt, um Qualitäten der Gesamtproduktion und Produktionsabläufe zu überprüfen und zu optimieren. Derzeit sind für diese Messaufgabe keine Messsysteme verfügbar.

Die DE 10 2004 057 092 A1 offenbart eine Einrichtung zum Erfassen des Durchmessers und/oder der Querschnittsform von stabförmigen Artikeln der Tabak verarbeitenden Industrie mit mehreren um den Artikel herum angeordneten Lichtquellen zum Aussenden von Licht auf den Artikel, wobei zu jeder Lichtquelle jeweils ein positionssensitiver Sensor zum Empfang von der Artikeloberfläche gestreutem Licht und zur Erfassung eines Höhenprofils des Artikels vorgesehen ist.

Die DE 10 2011 013 661 A1 offenbart eine Steuerungsvorrichtung für eine Maschine zur Herstellung stabförmiger Artikel der Tabak verarbeitenden Industrie mit einem optoelektronischen Sensormittel.

Die US 2008/0273211 A1 offenbart eine Lichtschnittmesseinrichtung zur dreidimensionalen Vermessung eines Objekts mit einem ersten und einem zweiten Lichtprojektor mit denen eine erste und eine zweite Messlichtprojektion auf der Oberfläche des zu vermessenden Objekts erzeugt werden kann. Ferner ist eine Kamera vorgesehen, um eine Lichtschnittaufnahme einer Oberfläche des Objekts zu generieren.

Die DE 10 2012 204 331 A1 offenbart ein Verfahren zum Betrieb einer Herstellmaschine von stabförmigen Artikeln der Tabak verarbeitenden Industrie, wobei in einem Verfahrensschritt Bilddaten des stabförmigen Artikels erfasst werden und anhand der Bilddaten die Güte einer zuvor eingebrachten Prägestruktur beurteilt wird.

Die der Erfindung zugrundeliegende Aufgabe besteht darin, eine Messvorrichtung bereitzustellen, bei der der Verschleiß verringert und der Platzbedarf verkleinert ist und die für jeden Stab, und im Falle eines Multisegmentstabs für jedes Segmentstück, geforderte oder gewünschte Qualitätswerte, Merkmale und/oder Serviceinformationen bereitstellt.

Die Erfindung löst diese Aufgabe mit den Merkmalen der unabhängigen Ansprüche.

Zur Profilmessung des Produktstrangs um dessen Umfang herum wird vom Messprinzip der optischen Triangulation, d.h. vom Lichtschnittverfahren, Gebrauch gemacht. Dabei wird das einfallende Licht rund um den gesamten Umfang des Produktstrangs herum, d.h. um die vollen 360°, auf dessen Oberfläche projiziert und erzeugt dort eine scharfe Lichtlinie rund um den Produktstrang herum. Eine Mehrzahl von lichtempfindlichen Elementen sind erfindungsgemäß relativ zu den einfallenden Strahlengängen in einer Triangulationsanordnung angeordnet, um jeweils ein Teilprofil des Produktstrangs aufzunehmen.

Es sind dabei mindestens drei lichtempfindliche Elemente vorgesehen, um alle Punkte eines Strangprofils um den gesamten Umfang herum erfassen zu können und auch für die jeweiligen Randbereiche des Produktstrangs, von einem lichtempfindlichen Element aus betrachtet, aussagekräftige Bildinformation zu erhalten. Sämtliche lichtempfindlichen Elemente nehmen einen definierten Winkelbereich des Strangprofils vorteilhaft gleichzeitig auf. Aus den vom Produktstrang reflektierten und von den lichtempfindlichen Elementen aufgenommenen Lichtlinien kann ein 360°-Umfangsprofil erstellt werden.

Erfindungsgemäß weist die optische Messvorrichtung mindestes ein Lichtumlenkungselement zwischen der Lichtquelle und dem Produktstrang zur Umlenkung mindestens eines einfallenden Strahlengangs, und/oder zwischen dem Produktstrang und mindestens einem lichtempfindlichen Element zur Umlenkung mindestens eines auslaufenden Strahlengangs auf. Auf diese Weise können die Lichtquelle, die lichtempfindlichen Elemente und/oder weitere optische Elemente an gewünschter Stelle platziert werden, was eine besonders kompakte bzw. bauraumsparende Anordnung ermöglicht.

Vorteilhaft kann in jedem auslaufenden Strahlengang mindestens ein Lichtumlenkungselement angeordnet sein, was die Freiheit in der Anordnung der optischen Elemente noch erhöht.

Der Begriff Strahlengang ist dabei möglichst breit zu verstehen und umfasst dabei sowohl die einfallenden Strahlengänge zwischen der Lichtquelle und dem Produktstrang, die auslaufenden Strahlengänge zwischen dem Produktstrang und den lichtempfindlichen Elementen, als auch (Teil-)Strahlengänge zwischen Lichtquelle, Produktstrang, lichtempfindlichen Elementen und Strahlumlenkungselementen.

Vorzugsweise ist die Anzahl der Lichtquellen geringer als die Anzahl der lichtempfindlichen Elemente, und erfindungsgemäß weist die Messvorrichtung genau eine Lichtquelle auf, was besonders kostengünstig ist. Dies wird ermöglicht, indem der von der Lichtquelle ausgehenden Lichtstrahl geeignet umgelenkt wird, um eine Mehrzahl von auf den Produktstrang einfallenden Lichtstrahlen bzw. Lichtfächern zu erzeugen.

Erfindungsgemäß erzeugt die Lichtquelle einen Hauptstrahlungsfächer, wobei ein Teil des Hauptstrahlungsfächers auf den Produktstrang fällt und ein anderer Teil des Hauptstrahlungsfächers an einer oder beiden Seiten des Produktstrangs an diesem vorbeiläuft und nach dem Passieren des Produktstrangs mit mindestens einem Lichtumlenkungselement auf den Produktstrang gerichtet wird.

Vorzugsweise weist die optische Messvorrichtung mindestens drei um den Umfang des Produktstrangs herum angeordnete einfallende Strahlengänge auf, um eine möglichst gleichmäßige und helle Ausleuchtung des Produktstrangs um dessen gesamten Umfang herum zu ermöglichen. Genau drei auf den Produktstrang einfallende Strahlengänge können zu diesem Zweck ausreichen.

Es ist alternativ auch möglich, eine Mehrzahl von Lichtquellen zur Erzeugung der auf den Produktstrang einfallenden Strahlengänge vorzusehen.

Vorteilhaft ist eine Kollimatorlinse im einfallenden Strahlengang angeordnet, um die einfallenden Strahlen zu parallelisieren und somit im Messfeld eine gleichmäßige Strahldichte bzw. Ausleuchtung der Strangoberfläche zu erhalten. Es sind jedoch auch Umsetzungen ohne Kollimatorlinse möglich.

Aus dem mit der optischen Messvorrichtung gemessenen bzw. errechneten dreidimensionalen Oberflächenprofil des Produktstrangs können zahlreiche gewünschte Qualitätswerte, Merkmale und/oder Servicedaten ermittelt werden.

Zu den ermittelbaren Qualitätswerten zählen beispielsweise Durchmesser und Umfang des Produktstrangs; Ovalität; Unrundheitsfaktor, z.B. Standardabweichung der Radien eines Strangprofils; Nahtlage eines Umhüllungsstreifens, beispielsweise als Winkel. Qualitätswerte werden vorteilhaft je Stab, je Segment und/oder als Mittelwert für die Produktion berechnet und angegeben. Generell können eine oder mehrere Standardabweichungen (oder Varianzen) einer oder mehrerer der vorgenannten Größen aussagekräftige Information enthalten und zur weiteren Verarbeitung ermittelt werden.

Zu ermittelnde Merkmale des Produktstrangs sind insbesondere solche, die sich im Produkt, d.h. im geschnittenen Strang, als Fehler bemerkbar machen. Merkmale dieser Art sind beispielsweise Profilfehler an Teilstücken des Strangs und/oder an Einzelsegmenten; Klebstellen eines Umhüllungsstreifens im Endlosstrangverlauf; Klebstellenfehler einer Klebenaht an Teilstücken des Strangs; Fremdkörperanhaftungen an einem Strangstück.

Vorteilhaft zu ermittelnde Servicedaten sind beispielsweise Strangschwingen; unruhige Längsnaht eines Umhüllungsstreifens, beispielsweise als Standardabweichung über die Produktion; Profilplot; 3D-Plot.

Nach dem zuvor Gesagten sind die lichtempfindlichen Elemente vorteilhaft positions-sensitive bildgebende Sensoren, insbesondere CMOS-Sensoren, um die Anwendung des Triangulationsverfahrens in der Datenauswertung zu ermöglichen.

Bevorzugt ist es, wenn die einfallenden Lichtstrahlen lotrecht auf den Produktstrang einfallen, um eine geschlossene Lichtlinie um den Umfang des Produktstrangs zu erhalten.

Vorteilhaft ist die Bildebene der lichtempfindlichen Elemente schräg zu der jeweiligen optischen Achse, d.h. der optischen Achse des entsprechenden Objektivs angeordnet. Eine solche Anordnung nach der Scheimpflug-Regel ermöglicht es, in der Bildebene der zu messenden Profilebene optimal scharfe Bilder zu erzeugen.

Die Abtastrate der Messvorrichtung ist vorteilhaft ausreichend hoch und insbesondere so hoch gewählt, dass der axiale Abstand zwischen zwei Messprofilen kleiner oder gleich der kürzesten Segmentlänge in dem Produktstrang ist. Dies ermöglicht es, für jedes Segment in dem Produktstrang mindestens ein Messprofil zu erhalten.

Jedem lichtempfindlichen Element kann vorteilhaft eine Steuerung, insbesondere ein FPGA und/oder ein Mikroprozessor, zur Vorverarbeitung, Vorauswertung und/oder Datenverdichtung der Signale von dem lichtempfindlichen Element zugeordnet sein. In dieser Ausführungsform Fall werden die Daten sämtlicher Steuerungen vorteilhaft zu einer Hauptsteuerungs- und/oder Datenzusammenfassungseinheit, insbesondere ein FPGA und/oder ein Mikroprozessor, zur Weiterverarbeitung gesendet.

Ein erfindungsgemäßes Messmodul umfasst vorteilhaft eine vorbeschriebene optische Messvorrichtung und ein die Messvorrichtung umgebendes Gehäuse mit Durchgangsöffnungen zum Durchführen des Produktstrangs durch das Messmodul. In diesem Fall sind die vorbeschriebenen Steuerungen und die Hauptsteuerungsund/oder Datenzusammenfassungseinheit vorteilhaft ebenfalls in dem Messmodul angeordnet. Besonders vorteilhaft ist es, wenn der Abstand einer Durchgangsöffnung zur nächstgelegenen Gehäusekante kleiner oder gleich dem halben Abstand zweier in einer Zweistrangmaschine zu verarbeitender Produktstränge ist. In diesem Fall können zwei identisch aufgebaute Messmodule verwendet, wobei das zweite Messmodul gegenüber dem ersten um 180° gedreht angeordnet ist.

Die Erfindung schlägt weiterhin die Verwendung einer vorbeschriebenen optischen Messvorrichtung zur Messung von Qualitätswerten, Merkmalen und/oder Servicedaten einzelner Segmente in sich endlos wiederholenden Multisegment-Stababschnitten eines Produktstrangs.

Nach einem weiteren Aspekt der Erfindung wird ein Verfahren zur optischen Messung von Qualitätswerten, Merkmalen und/oder Servicedaten eines endlos verarbeiteten Produktstrangs der Tabak verarbeitenden Industrie mittels einer vorbeschriebenen optischen Messvorrichtung vorgeschlagen, wobei die Messung vorteilhaft synchron zur Teilung des Produktstrangs in Stäbe und/oder Stabsegmente und/oder synchron zur Produktionsgeschwindigkeit erfolgt.

Die Erfindung wird im Folgenden anhand bevorzugter Ausführungsformen unter Bezugnahme auf die beigefügten Figuren erläutert. Dabei zeigt
- Fig. 1: eine perspektivische Ansicht einer optischen Messvorrichtung;
- Fig. 2: eine schematische Darstellung zur Illustration des verwendeten Triangulations- bzw. Lichtschnittverfahrens;
- Fig. 3: eine perspektivische Ansicht auf eine Lichterzeugungsanordnung in einer optischen Messvorrichtung;
- Fig. 4: eine perspektivische Detailansicht des zentralen Bereichs der optischen Messvorrichtung aus Figur 1;
- Fig. 5: eine perspektivische Draufsicht auf einen Produktstrang mit beispielhaft aufprojizierter Laserlinie;
- Fig. 6: einen schematischen Querschnitt durch den Produktstrang mit äquidistanter Anordnung der lichtempfindlichen Elemente;
- Fig. 7: eine perspektivische schematische Ansicht zweier Messmodule für eine Zweistrangmaschine;
- Fig. 8: eine perspektivische Ansicht einer Zigarettenherstellmaschine mit in der Verteilereinheit angeordnetem Messmodul;
- Fig. 9: ein schematisches Diagramm zur Illustration der Datenverarbeitung und -auswertung ausgehend von einer Messvorrichtung;
- Fig. 10: eine schematische Darstellung eines aus Multisegmentstäben zusammengesetzten Produktstrangs;
- Fig. 11, 12: beispielhafte Profilplots in Polarkoordinaten bzw. kartesischen Koordinaten; und
- Fig. 13: einen beispielhaften 3D-Profilplot.

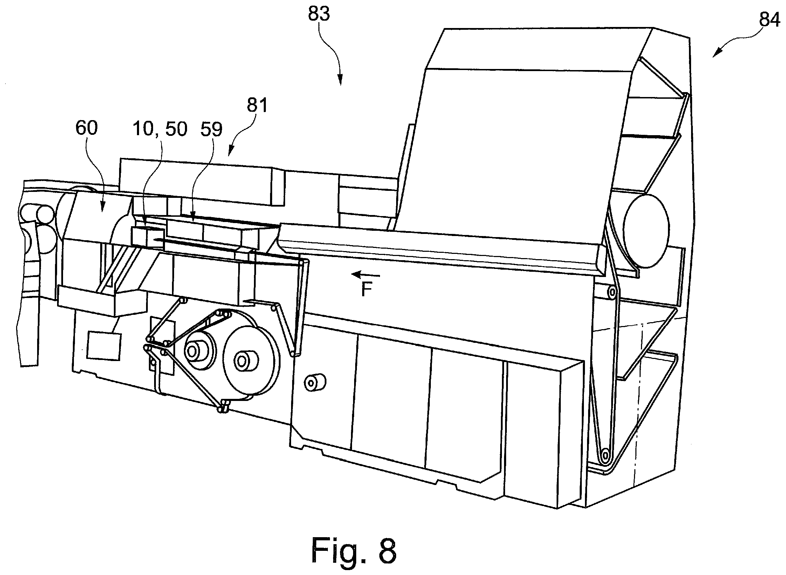

Die Messvorrichtung 10 dient zur Messung eines dreidimensionalen 360°-Oberflächenprofils eines endlos verarbeiteten Produktstrangs 11 der Tabak verarbeitenden Industrie, beispielsweise eines Tabakstrangs, eines Filterstrangs oder eines Multisegmentfilterstrangs. Der Produktstrang 11 wird in einer Strangmaschine 83 der Tabak verarbeitenden Industrie längsaxial gefördert, siehe Beschreibung der Figur 8.

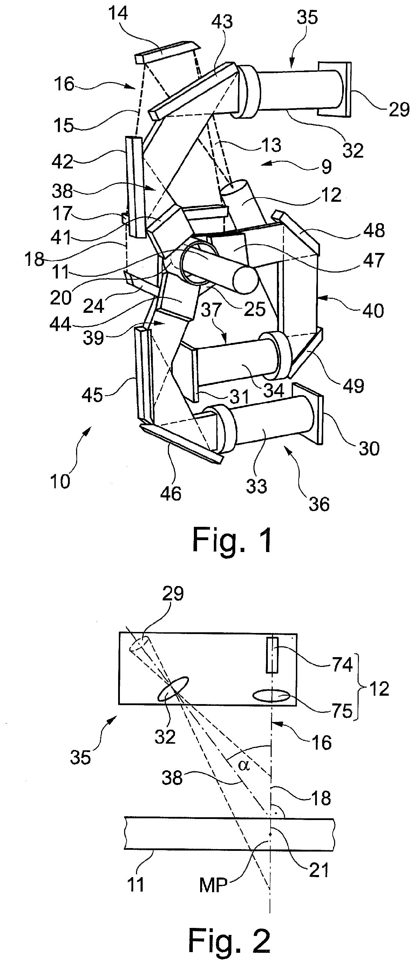

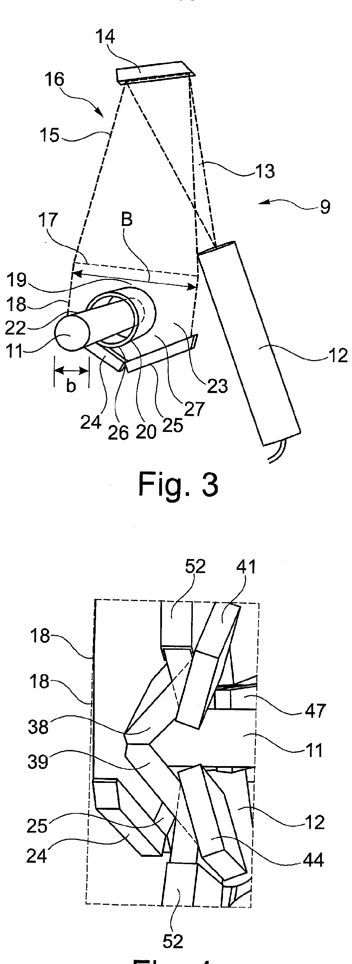

In Figur 1 ist ein Beispiel zur Umsetzung einer Messvorrichtung 10 unter beengten Bauraumbedingungen dargestellt. Die Messvorrichtung 10 umfasst eine Lichterzeugungsanordnung 9, die in Figur 3 der besseren Übersichtlichkeit halber in Alleinstellung, d.h. ohne die Kameras 35-37 und die auslaufseitigen Strahlumlenkungselemente 41-49 dargestellt ist. Die Lichterzeugungsanordnung 9 weist vorteilhaft genau eine Laserlichtquelle 12 auf, die zur Erzeugung eines Laserlichtfächers 13 eingerichtet ist und zu diesem Zweck (siehe Figur 2) beispielsweise eine Laserdiode 74 oder einen Laser und eine geeignete Optik 75, beispielsweise eine Zylinderlinse, oder eine bewegliche Abtastvorrichtung aufweisen kann. Der Lichtfächer 13 wird über ein Umlenkungselement 14 umgelenkt, so dass der umgelenkte Lichtfächer 15 entlang der Strangrichtung gesehen etwa mittig (siehe Figur 2) und senkrecht auf den Produktstrang 11 fällt. In dem auf den Produktstrang 11 einfallenden Strahlengang 16, der die Lichtfächer 13, 15, 18 umfasst, ist vorteilhaft eine Kollimatorlinse 17 angeordnet, um aus dem divergenten Lichtfächer 13, 15 einen etwa parallelen Lichtfächer 18 zu erzeugen.

Die Umlenkung durch das Umlenkungselement 14 erfolgt vorteilhaft um einen Winkel von mindestens 90°, weiter vorteilhaft mindesten 135°, beispielsweise im Winkelbereich zwischen 135° und 180°.

Der aufweitete und gegebenenfalls kollimierte einfallende Strahlengang 16 wird vorteilhaft mithilfe von Spiegeln 24, 25 von zwei zusätzlichen, und somit insgesamt drei Seiten auf den Strang 11 projiziert, um eine um den Umfang des Strangs 11 umlaufende Lichtlinie 21 zu erhalten. Dies wird im Folgenden genauer anhand der Figur 3 beschrieben.

Der einfallende, vorteilhaft parallele Strahlengang 16, 18 fällt in einem mittleren Bereich 19, der als Hauptstrahlungsfächer bezeichnet werden kann, auf den Produktstrang 11. Zuvor durchquert der parallelisierte Lichtfächer 18 noch ein für das Laserlicht transparentes Schutzrohr 20, das beispielsweise aus Glas bestehen kann und im Bereich der Messstelle um den Umfang des Produktstrangs 11 herum angeordnet ist, um die Bildsensoren 29-31 der Kameras 35-37 (siehe Figur 1) von Staub und Fremdpartikeln frei zu halten. Ein parallel zu der Wandung des Schutzrohrs 20 strömender Luftstrom kann erzeugt werden, um den Messbereich sauber halten.

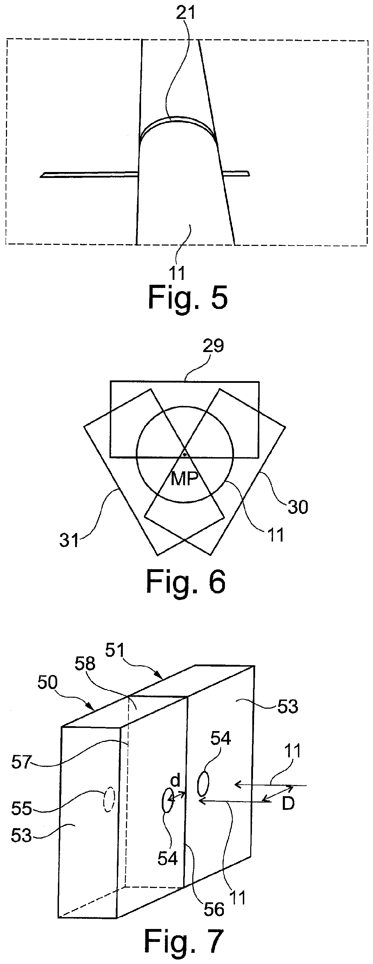

Der mittlere Bereich 19 des auf den Produktstrang 11 einfallenden Lichtfächers 18 erzeugt auf der Oberfläche des Produktstrangs 11, insbesondere auf einem Hüllmaterial desselben, eine Laserlichtlinie 21, wie dies bespielhaft in Figur 5 zu sehen ist.

Der parallelisierte Lichtfächer 18 hat eine Gesamtbreite B, die mindestens das 3-fache, vorteilhaft mindestens das 4-fache, noch weiter vorteilhaft mindestens das 5-fache der Breite b des Produktstrangs 11 beträgt, siehe Figur 3. Auf beiden Seiten des Produktstrangs 11 kann daher jeweils ein seitlicher Bereich 22, 23 des parallelisierten Strahlungsfächers 18 den Produktstrang 11 passieren.

Auf der Rückseite des Produktstrangs 11, von dem einfallenden Strahlungsfächer 15, 18 bzw. einfallenden Strahlengang 16 aus betrachtet, ist auf einer oder vorzugsweise beiden Seiten des Produktstrangs 11 jeweils ein weiteres Umlenkelement 24, 25 vorgesehen, das jeweils einen der seitlichen Bereiche 22, 23 des Strahlungsfächers 18 so umlenkt, dass dieser als einfallende Strahlenfächer 26, 27 von der Rückseite her auf die Oberfläche des Produktstrangs 11 fällt. Vorteilhaft erfolgt die Umlenkung durch jedes Umlenkelement 24, 25 um einen Winkel im Bereich 120° bis 180°, beispielsweise um 150°. Auf diese Weise, oder durch eine andere geeignete Strahlumlenkung, wird erreicht, dass die zentralen Strahlachsen aller drei auf den Produktstrang einfallenden Strahlenfächer 19, 26, 27 Winkel von 120° zueinander einschließen.

Wie in Figur 2 am besten zu sehen ist, sind die Umlenkelemente 14, 24 und 25 im einfallenden Strahlengang 16 so angeordnet, dass sämtliche auf den Produktstrang einfallenden Strahlenfächer 19, 26, 27 an der gleichen axialen Position MP des Produktstrangs 11 auf diesen treffen, so dass die von den auf den Produktstrang einfallenden Strahlenfächer 19, 26, 27 sich wechselseitig überlappen und insgesamt eine in sich geschlossene, um 360° vollständig um den Produktstrang 11 umlaufende Laserlinie 21 erzeugen. Die um 360° um den Produktstrang 11 umlaufende Laserlinie 21 spannt eine Ebene auf, die die zentrale Längsachse des Produktstrangs 11 im Punkt MP schneidet.

Die um den Produktstrang 11 auf deren Oberfläche umlaufende Laserlinie 21 wird mittels optischer Triangulation aufgenommen. Zu diesem Zweck ist eine Mehrzahl von lichtempfindlichen Elementen 29, 30, 31 um den Produktstrang herum angeordnet, siehe Figur 1. Die lichtempfindlichen Elemente 29, 30, 31 sind insbesondere bildgebende Sensoren, die auf die lichtempfindlichen Elemente 29, 30, 31 einfallendes Licht in ein elektrisches Signal umwandeln, welches die Bildinformation enthält und von einer elektronischen Auswerteeinrichtung ausgewertet wird. Vorteilhaft ist jedem einfallenden Lichtfächer bzw. Lichtstrahl 19, 26, 27 ein entsprechendes lichtempfindliches Element 29, 30, 31 zugeordnet.

Im Folgenden wird das verwendete Messprinzip der Lasertriangulation am Beispiel eines einfallenden Lichtfächers bzw. Lichtstrahls 19 und eines entsprechenden lichtempfindlichen Elements 29 anhand der Figur 2 erläutert. Gleiches gilt jeweils für die Triangulationsanordnung der weiteren lichtempfindlichen Elemente 30, 31 relativ zu den entsprechenden einfallenden Lichtfächern bzw. Lichtstrahlen 26, 27.

Mithilfe der Laserlichtquelle 12 wird, wie zuvor beschrieben, eine in Strangrichtung sehr dünne Laserlinie, bzw. ein Laserlichtfächer, auf den Produktstrang 11 gerichtet. Der einfallende Lichtstrahl bzw. Lichtfächer 16, 19 fällt in einer Ansicht quer zum Produktstrang 11 (siehe Figur 2) vorteilhaft senkrecht auf dessen Oberfläche. Das lichtempfindliche Element 29 ist in dieser Ansicht so angeordnet, dass die optische Achse des von der Oberfläche des Produktstrangs 11 auslaufenden Lichts einen Triangulationswinkel α mit der optischen Achse des auf die Oberfläche des Produktstrangs 11 einfallenden Lichts einschließt. Der Triangulationswinkel α liegt vorteilhaft im Bereich zwischen 10° und 80°, weiter vorteilhaft zwischen 20° und 70°, noch weiter vorteilhaft zwischen 30° und 60° und optimalerweise zwischen 40° und 50°. Aufgrund des Triangulationswinkels α wird die Oberflächenstruktur des Produktstrangs, die sich in einem entsprechenden Verlauf der Laserlinie 21 widerspiegelt, auf dem lichtempfindlichen Element 29 abgebildet und lässt sich rechnerisch ermitteln. Mit anderen Worten wird mittels einer Optik bzw. eines Objektivs 32 und einem bildgebenden Sensor 29 das Bild der projizierten Laserlichtlinie 21 (siehe Figur 5) unter einem definierten Winkel, nämlich dem Triangulationswinkel α aufgenommen, wodurch man Höheninformation erhält. Auf diese Weise wird eine Messgenauigkeit der Durchmessermessung bzw. eine Messauflösung von besser als 0.1 mm, beispielsweise 0.01 mm erreicht.

Jedem lichtempfindlichen Element 29-31 ist vorteilhaft ein entsprechendes Objektiv 32-34 zugeordnet, siehe Figur 1. Jedes Objektiv 32-34 weist wie üblich mindestens eine, vorzugsweise eine Mehrzahl von optischen Linsen auf. Jedes lichtempfindliche Element 29-31 bildet mit dem ihm zugeordneten Objektiv 32-34 eine entsprechende Kamera 35-37. Die Kameras 35-37 sind so angeordnet, dass die Laserlichtlinien 21 auf der Oberfläche des Produktstrangs 11 im Fokus des jeweiligen Objektivs 32-34 liegt, damit die Laserlichtlinien 21 scharf auf die lichtempfindlichen Elemente 29-31 abgebildet werden. Eine oder mehrere der Kameras 35 bis 37 können vorteilhaft so angeordnet sein, dass ihre optische Achse jeweils waagrecht verläuft, wie dies in Figur 1 zu sehen ist.

Zwischen dem Produktstrang 11 und jeder Kamera 35-37 sind vorteilhaft ein oder mehrere Strahlumlenkungselemente 41-49 angeordnet. Dadurch können die Kameras 35-37 je nach zur Verfügung stehendem Bauraum optimal angeordnet werden, um ein möglichst kompaktes und an die jeweilige Einbausituation optimal angepasstes Messmodul 50, 51 (siehe Figur 7) erzielen zu können. Die Strahlumlenkungselemente 41-49 können beispielsweise Spiegel und/oder Prismen sein oder umfassen.

Im Folgenden wird ein auslaufender Strahlengang 38 zu dem lichtempfindlichen Element 29 beispielhaft beschrieben. Vergleichbares gilt jeweils für die weiteren auslaufenden Strahlengänge 39, 40 zu den lichtempfindlichen Elementen 30, 31.

In dem auslaufenden Strahlengang 38 zu dem lichtempfindlichen Element 29 sind in der Ausführungsform nach Figur 1 drei Strahlumlenkungselemente 41, 42, 43 angeordnet. Ausführungsformen mit einem, zwei oder mehr als drei Strahlumlenkungselementen in jedem auslaufen Strahlengang 38-40 sind denkbar.

Ausgehend von der Oberfläche des Produktstrangs 11 kann zunächst ein erstes Strahlumlenkungselement 41 vorgesehen sein, das den beispielsweise unter dem Triangulationswinkel α auslaufenden Strahl 38 so umlenkt, dass der umgelenkte Strahl 52 in einem Winkel zwischen 75° und 105°, beispielsweise um 90° relativ zu der Strangachse verläuft. Dies ist am besten in Figur 4 zu sehen.

Der von dem ersten Strahlumlenkungselement 41 umgelenkte Lichtstrahl 52 wird durch mindestens ein, hier zwei weitere Strahlumlenkungselemente 42, 43 so umgelenkt, dass der auslaufende Lichtstrahl 38 schließlich in die Kamera 35 eintritt. Die gesamte Umlenkung durch das mindestens eine weitere Strahlumlenkungselement 42, 43 beträgt vorteilhaft mindestens 90° und beispielsweise 135° oder, wie im Fall des lichtempfindlichen Elements 31, sogar 180°.

Die lichtempfindlichen Elemente 29, 30, 31 sind vorteilhaft um gleiche Winkelabstände zueinander, im bevorzugten Fall von drei lichtempfindlichen Elementen 29, 30, 31 somit um jeweils 120° versetzt um den Produktstrang 11 herum angeordnet. Dies ist in Figur 6 schematisch dargestellt. Mit anderen Worten deckt jedes lichtempfindliche Element 29, 30, 31 einen Winkelbereich von 120°, bzw. 360°/n im Falle von n lichtempfindlichen Elementen 29, 30, 31, in Umfangsrichtung des Produktstrangs 11 ab.

Wenn im jeweiligen auslaufenden Strahlengang 38-40 zwischen dem Produktstrang 11 und dem jeweiligen lichtempfindlichen Element 29-31 jeweils ein oder mehrere Strahlumlenkungselemente 41-49 angeordnet sind, sind die auslaufenden Strahlengänge 38-40 vorteilhaft um gleiche Winkelabstände zueinander um den Produktstrang 11 herum angeordnet. In diesem Fall kommt es nicht auf die Winkelabstände der lichtempfindlichen Elemente 29-31 an, die aufgrund der Lichtumlenkungselemente 41-49 abweichend angeordnet sein können.

Wie zuvor beschrieben werden die Strahlengänge ausgehend von der Laserlichtquelle 12 bis hin zu den Bildaufnehmern 29-31 über eine Mehrzahl von Spiegeln 14, 24, 25, 41-49 umgelenkt, um die einzelnen Bauteile 12, 29-31 optimal platzieren zu können.

Durch Kombination von hier drei Laserlinien 21 über jeweils 120° Umfangsbereich des Produktstrangs 11 (allgemein n Laserlinien um jeweils 360°/n Umfangsbereich des Produktstrangs 11) wird daher eine vollständiges dreidimensionales 360°-Profil der Oberfläche des Produktstrangs 11, d.h. um den gesamten Umfang des Produktstrangs 11, erhalten.

Die Messvorrichtung 10 ist vorteilhaft von einem Gehäuse 53 umgeben und bildet somit ein Messmodul 50, 51. In der Figur 7 ist die Situation für eine Zweistrangmaschine zur parallelen Verarbeitung zweier endloser Produktstränge 11 gezeigt. In diesem Fall sind vorteilhaft zwei Messmodule 50, 51, d.h. für jeden Produktstrang 11 ein separates Messmodul 50, 51 vorgesehen. Die Messmodule 50, 51 können vorteilhaft identisch aufgebaut sein. Das Gehäuse 53 jedes Messmoduls 50, 51 weist vorteilhaft einander gegenüberliegende Durchgangsöffnungen 54, 55 zur Durchführung des in Figur 7 nur schematisch gezeigten Produktstrangs 11 durch das Gehäuse 53 und somit durch die Messvorrichtung 10 auf. In der Figur 7 ist nur für das Messmodul 50 die hintere Durchgangsöffnung 55 in der Rückwand des Gehäuses 53 schematisch gezeigt.

Die Anordnung der Durchgangsöffnungen 54, 55 in dem Gehäuse 53 kann asymmetrisch sein. Insbesondere können die Durchgangsöffnungen 54, 55 mit einem wesentlich kleineren Abstand d zu einer nächstliegenden Gehäusekante 56 bzw. 57 oder Gehäusewand 58 angeordnet sein als zu jeder anderen Gehäusekante oder Gehäusewand. Besonders vorteilhaft ist der Abstand d höchstens halb so groß wie der Abstand D der beiden Stränge in einer Zweistrangmaschine. In diesem Fall kann könne identisch aufgebaute, lediglich um 180° gegeneinander verdreht angeordnete Messmodule verwendet werden, wie in Figur 7 gezeigt.

In der Figur 8 ist schematisch eine Strangeinheit 81 einer Strangmaschine 83 der Tabak verarbeitenden Industrie mit darin integrierter Messvorrichtung 10 gezeigt. Im Falle einer Tabakstrangmaschine 83, wie in Figur 8, ist der Strangeinheit 81 üblicherweise eine Verteilereinheit 84 vorgeschaltet. In einer anderen Ausführungsform kann es sich um eine Filterstrangeinheit 81, beispielsweise in Form einer Filtertow-Aufbereitungseinheit, in einer Filterstrangmaschine 83 handeln. In einer weiteren Ausführungsform kann es sich um einen Filtersegment-Zusammenstellungsabschnitt 81 einer Multisegmentfilter-Strangmaschine 83 handeln. Solche Strangmaschinen 83 und Strangeinheiten 81 sind hinlänglich bekannt, weshalb auf eine detaillierte Beschreibung hier verzichtet wird. Die zuvor beschriebene Messvorrichtung 10 ist in die Strangeinheit 81 bzw. in die Strangmaschine 83 und damit in die Produktion integriert.

Eine vorteilhafte Position der Messvorrichtung 10 oder des Messmoduls 50 in der Strangeinheit ist in Strangförderrichtung zwischen einer Umhüllungseinrichtung 59 zur Umhüllung des Materialstrangs mit einem Umhüllungsstreifen, beispielsweise Papier, und einem Schneidapparat 60 zum fortlaufenden Zerschneiden des Endlosstrangs 11 in einzelne stabförmige Elemente.

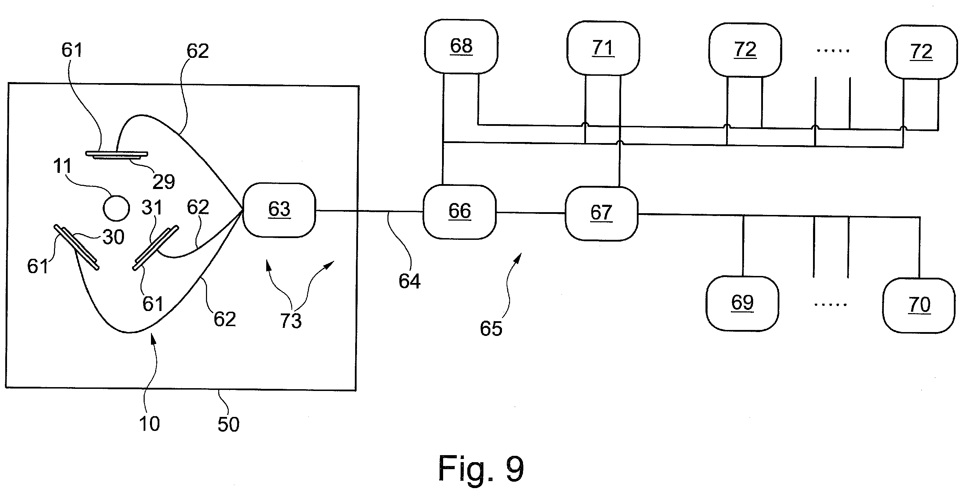

Im Folgenden wird die Messdatenaufbereitung in dem Messmodul 50 und die weitere Datenverarbeitung anhand von Figur 9 erläutert.

Das Messmodul 50 umfasst, wie zuvor beschrieben, mindestens drei lichtempfindliche Elemente bzw. bildgebende Sensoren 29-31, die beispielsweise um jeweils 120° versetzt um den Produktstrang 11 herum angeordnet sind. Jedem Sensor 29-31 kann eine Steuerung 61 beispielsweise in Form eines FPGA und/oder Microcontroller, zugeordnet sein, die insbesondere zur Vorauswertung und/oder zur Datenverdichtung dienen kann. Die Daten der einzelnen Bildsensor-Module werden über eine entsprechend schnelle Datenverbindung 62 an eine Hauptsteuerungs- oder Datenzusammenfassungseinheit 63, beispielsweise ebenfalls ein FPGA und/oder Microcontroller, übertragen. Das Sensormodul 50 stellt nun über eine schnelle Datenverbindung 64 Profilwerte des Produktstrangs 11 beispielsweise als Polarkoordinaten oder kartesischen Koordinaten einer folgenden Auswerteeinheit 65 zur Verfügung.

Dabei werden in einer Recheneinheit 66, die die Sensordaten von dem Sensormodul 50 empfängt, in Verbindung mit der Maschinensteuerung 67 aus den Sensordaten Qualitätswerte, spezielle Merkmale des Strangs und/oder Servicedaten generiert. Die Daten werden vorteilhaft für die Maschinenvisualisierung und/oder Parametrierung 68 und/oder die Steuerung und/oder Regelung des Herstellungsprozesses, insbesondere über Stellglieder 69 für Regelung und/oder Stellglieder 70 für Produktselektion oder Produktausschuss, genutzt, um eine höhere Produktqualität und eine effizientere Laufzeit der Herstellmaschine zu erhalten. Die Hauptsteuerungsoder Datenzusammenfassungseinheit 63 und/oder die Recheneinheit 66 gemäß Figur 9 bilden vorteilhaft eine digitale Auswerteeinrichtung 73 gemäß den Patentansprüchen.

Über entsprechende Datenkanäle können die Informationen auch zur Datensammlung und Analyse in einem übergeordneten Datensammler 71, sowie zur Steuerung und/oder Regelung vorgeschalteter Maschinen 72 genutzt werden, um auch dort die Qualität der der Herstellmaschine zuzuliefernden Teile zu erhöhen.

In einer alternativen Ausführungsform, in der die Rechenleistung der Hauptsteuerungs- oder Datenzusammenfassungseinheit 63 ausreichend groß ist, könne auch dort schon aus den Sensordaten Qualitätswerte, spezielle Merkmale des Strangs und/oder Servicedaten errechnet und für Visualisierung 68 und Weiterverarbeitung über geeignete Datenkanäle bereitgestellt werden.

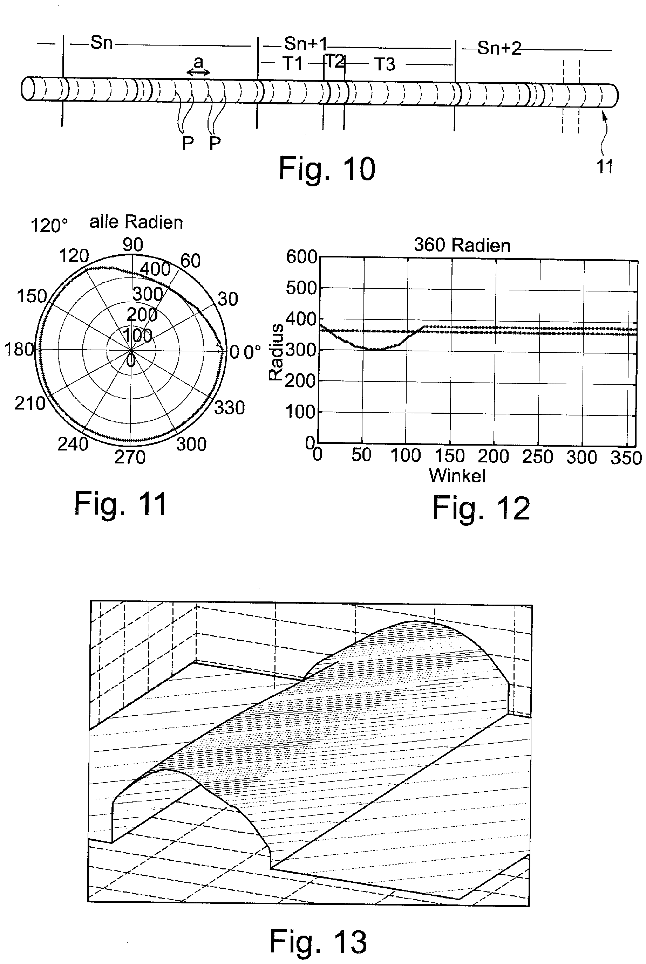

Eine vorteilhafte Anwendung der Messvorrichtung 10 dient zur Messung von Qualitätswerten, Merkmalen und/oder Servicedaten einzelner Segmente in sich endlos wiederholenden Multisegment-Stababschnitten eines Produktstrangs 11. Dies sei im Folgenden anhand von Figur 10 erläutert.

Der endlos verarbeitete Produktstrang ist aus sich fortlaufend wiederholenden Stababschnitten ..., Sn, Sn+1, Sn+2, ... gebildet. Jeder Stabschnitt entspricht einem Stab nach dem Zerschneiden des Produktstrangs 11 in einzelne Stäbe mittels dem Schneidapparat 60 (siehe Figur 8). Die Stababschnitte können daher vereinfacht auch als Stäbe bezeichnet werden.

Jeder Stab bzw. Stababschnitt Sn ist in dieser Anwendung wiederum aus einer gleichen Folge von Segmenten T1, T2, T3, ... zusammengesetzt, wobei die Summe der Segmentlängen die Stablänge ergibt. Im vorliegenden Fall weist jeder Stab drei Segmente T1, T2, T3 auf, wobei mehr oder weniger als drei Segmente pro Stab möglich sind. Es handelt sich hier also um Multisegment-Stäbe.

Wie aus Figur 10 ersichtlich ist, ist die Abtastrate der Messvorrichtung ausreichend hoch, so dass mindestens für jedes Segment ein Umfangsprofil P des Produktstrangs 11 messbar ist. Mit anderen Worten ist der Abstand a zwischen zwei Messprofilen P, der sich aus der Abtastrate ergibt, vorteilhaft kleiner oder gleich der kürzesten Segmentlänge in dem Produktstrang 11, hier kleiner oder gleich der Länge des Segments T2. In praktischen Ausführungsformen soll der Abstand zwischen zwei Profilscans P höchstens 20 mm, vorteilhaft höchstens 10 mm, weiter vorteilhaft höchstens 5 mm, beispielsweise 3 mm betragen. Die Abtastrate beträgt in der Praxis vorteilhaft mindestens 500 Profilscans P pro Sekunde, vorteilhaft mindestens 1000 Profilscans P pro Sekunde, weiter vorteilhaft mindestens 2000 Profilscans P pro Sekunde, noch weiter vorteilhaft mindestens 3000 Profilscans P pro Sekunde und beispielsweise 4000 Profilscans P pro Sekunde.

Aus Figur 10 wird auch deutlich, dass die Messungen bzw. Scans der Umfangsprofile P des Produktstrangs 11 vorteilhaft synchron zur Teilung des Produktstrangs in Stäbe und/oder Stabsegmente und/oder zur Produktionsgeschwindigkeit erfolgen, d.h. die Abtastrate ist vorteilhaft so an die Produktionsgeschwindigkeit angepasst, dass die Stäbe bzw. Stabsegmente immer an der gleichen Axialposition gemessen werden. Dies verbessert die Vergleichbarkeit der Messergebnisse.

Aus den ermittelten Umfangsprofilen können diverse Qualitätsdaten, Merkmale des Produktstrangs 11 und Servicewerte ermittelt werden.

Qualitätswerte werden vorteilhaft je Stab, je Segment und/oder als Mittelwert für die Produktion berechnet und angegeben. Dazu zählen beispielsweise Durchmesser und Umfang des Produktstrangs 11; Ovalität; Unrundheitsfaktor, z.B. Standardabweichung der Radien eines Strangprofils; Nahtlage eines Umhüllungsstreifens, beispielsweise als Winkel.

Generell können eine oder mehrere Standardabweichungen (oder Varianzen) einer oder mehrerer der vorgenannten Größen aussagekräftige Information enthalten und zur weiteren Verarbeitung ermittelt werden. Werden etwa aus Einzelwerten Mittelwerte gebildet, so ist eine gleichzeitige Angabe einer Standardabweichung sinnvoll, beispielsweise um frühzeitig Hinweise auf eine unruhiger werdende Produktion und bevorstehende Fehler, z.B. durch Maschinenverschmutzung, zu erhalten und rechtzeitig darauf reagieren zu können.

Zu ermittelnde Merkmale des Produktstrangs sind insbesondere solche, die sich im Produkt, d.h. im geschnittenen Strang, als Fehler bemerkbar machen. Ein fehlerhaftes Produkt wird dann vorteilhaft aus der Produktion selektiert bzw. entfernt. Merkmale dieser Art sind beispielsweise Profilfehler an Teilstücken des Strangs und/oder an Einzelsegmenten; Klebstellen eines Umhüllungsstreifens im Endlosstrangverlauf; Klebstellenfehler einer Klebenaht an Teilstücken des Strangs; Fremdkörperanhaftungen an einem Strangstück.

Serviceinformationen sind für Maschineneinrichter, Servicepersonal und Maschinenbediener wichtig, um Aussagen über eine zuverlässige Produktion zu erhalten und gegebenenfalls korrigierend in den Fertigungsprozess eingreifen zu können. Servicedaten dieser Art sind beispielsweise Strangschwingen; unruhige Längsnaht eines Umhüllungsstreifens, beispielsweise als Standardabweichung über die Produktion; Profilplot; 3D-Plot.

Ein Beispiel für einen Profilplot eines Scans ist in den Figuren 11 und 12 gezeigt. In Figur 11 ist ein Profilplot in Polarkoordinaten gezeigt. Deutlich erkennbar ist eine fehlerhafte Abflachung des Profils und somit des Produktstrangs im Bereich zwischen 0° und 120°. In Figur 12 ist das gleiche Umfangsprofil in einem kartesischen Koordinatensystem als Radius über den Winkel bzw. als Funktion des Winkels aufgetragen. Auch hier ist die fehlerhafte Abflachung des Profils und somit des Produktstrangs im Bereich zwischen 0° und 120° deutlich erkennbar.

Ein Beispiel für einen 3D-Profilplot, der aus mehreren Einzelprofil-Plots gemäß Figur 11 in Produktionsrichtung hintereinander zusammengesetzt ist, ist in Figur 13 gezeigt. Die Grafik zeigt dabei nur das einem Bildsensor entsprechende Teilprofil. Selbstverständlich kann auch das komplette 360°-Profil dargestellt werden. Im Bild ist eine Verdickung im hinteren Bereich erkennbar, dabei kann es sich beispielsweise um ein Einzelsegment größerer Dicke handeln. An der Vorderkante ist im hellen Bereich eine Längsfalte sichtbar.

Anstelle einer Laserlinie 21 kann auch eine Lichtlinie oder eine Hell-Dunkel-Kante insbesondere aus strukturiertem Licht verwendet werden.

Anstelle einer einzelnen umlaufenden Laserlinie könne auch mehrere Lichtlinien in definierten axialen Abständen auf den Produktstrang projiziert werden, so dass pro Bildaufnahme mehrere Profile gleichzeitig gemessen werden können.

## Patentansprüche

1. Optische Messvorrichtung (10) zur Ermittlung mindestens eines Merkmals, Qualitätswerts und/oder von Servicedaten eines endlos verarbeiteten Produktstrangs (11) der Tabak verarbeitenden Industrie auf der Grundlage der Triangulation, umfassend
- eine Lichtquelle (12) zur Erzeugung einer Mehrzahl von einfallenden Strahlengängen (16), die um den Umfang des Produktstrangs (11) herum auf dessen Oberfläche fallen;
- mindestens drei lichtempfindliche Elemente (29-31), die relativ zu den einfallenden Strahlengängen (16) in einer Triangulationsanordnung angeordnet sind,
- eine digitale Auswerteeinrichtung (73), die zur Ermittlung eines 3-dimensionalen Oberflächenprofils des Produktstrangs (11) aus den von den lichtempfindlichen Elementen (29-31) übermittelten Messsignalen eingerichtet ist,
wobei die optische Messvorrichtung (10) mindestes ein Lichtumlenkungselement (14) zwischen der Lichtquelle (12) und dem Produktstrang (11) zur Umlenkung mindestens eines einfallenden Strahlengangs (16) aufweist, **dadurch gekennzeichnet, dass** die Messvorrichtung (10) genau eine Lichtquelle (12) aufweist, wobei die Lichtquelle (12) dazu eingerichtet ist einen Hauptstrahlungsfächer (15) zu erzeugen,
wobei ein Teil (19) des Hauptstrahlungsfächers (15) auf den Produktstrang (11) fällt und ein anderer Teil des Hauptstrahlungsfächers (22, 23) an einer oder beiden Seiten des Produktstrangs (11) an diesem vorbeiläuft und nach dem Passieren des Produktstrangs (11) mit mindestens einem weiteren Lichtumlenkungselement (24, 25) auf den Produktstrang (11) gerichtet wird, wobei die Lichtumlenkungselemente (14, 24, 25) im einfallenden Strahlengang (16) so angeordnet sind, dass die auf den Produktstrang (11) einfallenden Strahlenfächer (19, 26, 27) insgesamt eine in sich geschlossene, um 360° vollständig um den Produktstrang (11) umlaufende Lichtlinie erzeugen.

2. Optische Messvorrichtung (10) nach Anspruch 1, **dadurch gekennzeichnet, dass** die optische Messvorrichtung (10) mindestens ein Lichtumlenkungselement (41, 42, 43) zwischen dem Produktstrang (11) und mindestens einem der lichtempfindlichen Elemente (29, 30) zur Umlenkung mindestens eines auslaufenden Strahlengangs (38-40) aufweist.

3. Optische Messvorrichtung (10) nach einem der vorangehenden Ansprüche, **dadurch gekennzeichnet, dass** die optische Messvorrichtung (10) mindestens oder genau drei um den Umfang des Produktstrangs (11) herum angeordnete einfallende Strahlengänge (16) aufweist.

4. Optische Messvorrichtung (10) nach einem der vorangehenden Ansprüche, **dadurch gekennzeichnet, dass** eine Kollimatorlinse (17) im einfallenden Strahlengang (16) angeordnet ist.

5. Optische Messvorrichtung (10) nach einem der vorangehenden Ansprüche, **dadurch gekennzeichnet, dass** in jedem auslaufenden Strahlengang (38, 39, 40) mindestens ein Lichtumlenkungselement (41-43; 44-46; 47-49) angeordnet ist.

6. Optische Messvorrichtung (10) nach einem der vorangehenden Ansprüche, **dadurch gekennzeichnet, dass** die Auswerteeinrichtung (73) zur Ermittlung eines oder mehrerer der folgenden Qualitätswerte oder Merkmale oder Servicedaten des Produktstrangs (11) aus dem 3-dimensionalen Oberflächenprofil eingerichtet ist:
- Durchmesser;
- Umfang;
- Ovalität;
- Unrundheitsfaktor;
- Nahtlage eines Umhüllungsstreifens;
- Standardabweichung einer oder mehrerer der vorgenannten Größen;
- Profilfehler;
- Klebstellen eines Umhüllungsstreifens;
- Klebstellenfehler einer Klebenaht;
- Fremdkörperanhaftungen;
- Strangschwingen;
- unruhige Längsnaht eines Umhüllungsstreifens;
- Profilplot;
- 3D-Plot.

7. Optische Messvorrichtung (10) nach einem der vorangehenden Ansprüche, **dadurch gekennzeichnet, dass** die lichtempfindlichen Elemente (29-31) positions-sensitive bildgebende Sensoren, insbesondere CMOS-Sensoren, sind und/oder dass die einfallenden Strahlengänge (16) lotrecht auf den Produktstrang einfallen und/oder dass die Bildebene der lichtempfindlichen Elemente (29-31) schräg zu der jeweiligen optischen Achse angeordnet ist.

8. Optische Messvorrichtung (10) nach einem der vorangehenden Ansprüche,
**dadurch gekennzeichnet, dass** die Abtastrate der Messvorrichtung (10) so gewählt ist, dass der Abstand, a, zwischen zwei Messprofilen, P, kleiner oder gleich
der kürzesten Segmentlänge in dem Produktstrang (11) ist.

9. Optische Messvorrichtung (10) nach einem der vorangehenden Ansprüche, **dadurch gekennzeichnet, dass** jedem lichtempfindlichen Element (29-31) oder sämtlichen lichtempfindlichen Elementen (29-31) eine Steuerung (61), insbesondere ein FPGA und/oder ein Mikroprozessor, zur Vorverarbeitung, Vorauswertung und/oder Datenverdichtung der Signale von dem lichtempfindlichen Element (29-31) zugeordnet ist.

10. Optische Messvorrichtung (10) nach Anspruch 9, **dadurch gekennzeichnet, dass** die Daten der Steuerung (61) oder sämtlicher Steuerungen (61) zu einer Hauptsteuerungs- und/oder Datenzusammenfassungseinheit (63), insbesondere ein FPGA und/oder ein Mikroprozessor, zur Weiterverarbeitung gesendet werden.

11. Messmodul (50, 51) umfassend eine optische Messvorrichtung (10) nach einem der vorangehenden Ansprüche und ein die Messvorrichtung (10) umgebendes Gehäuse (53) mit Durchgangsöffnungen (54, 55) zum Durchführen des Produktstrangs (11) durch das Messmodul (50, 51).

12. Messmodul (50, 51) nach Anspruch 11, **dadurch gekennzeichnet, dass** der Abstand d einer Durchgangsöffnung zur nächstgelegenen Gehäusekante (56) kleiner oder gleich dem halben Abstand, D, zweier in einer Zweistrangmaschine zu verarbeitender Produktstränge (11) ist.

13. Verwendung einer optischen Messvorrichtung (10) nach einem der Ansprüche 1 bis 10 zur Messung von Qualitätswerten, Merkmalen und/oder Servicedaten einzelner Segmente, T1, T2, T3, in sich endlos wiederholenden Multisegment-Stababschnitten, Sn, eines Produktstrangs (11).

14. Verfahren zur optischen Messung von Qualitätswerten, Merkmalen und/oder Servicedaten eines endlos verarbeiteten Produktstrangs (11) der Tabak verarbeitenden Industrie mittels einer optischen Messvorrichtung (10) nach einem der Ansprüche 1 bis 10, **dadurch gekennzeichnet, dass** die Messung synchron zur Teilung des Produktstrangs (11) in Stäbe, Sn, und/oder Stabsegmente, T1, T2, T3, und/oder synchron zur Produktionsgeschwindigkeit erfolgt.

## Claims

1. Optical measuring device (10) for determining at least one feature, quality value and/or service data of a continuously processed product rod (11) of the tobacco-processing industry on the basis of triangulation, comprising
- a light source (12) for generating a plurality of incident beam paths (16) which are incident around the circumference of the product rod (11) onto the surface thereof;
- at least three light-sensitive elements (29-31) arranged relative to the incident beam paths (16) in a triangulation arrangement,
- a digital evaluation device (73) which is adapted to determine a 3-dimensional surface profile of the product rod (11) from the measurement signals transmitted by the light-sensitive elements (29-31),
wherein the optical measuring device (10) comprises at least one light deflecting element (14) between the light source (12) and the product rod (11) for deflecting at least one incident beam path (16), **characterized in that** the measuring device (10) comprises exactly one light source (12), wherein the light source (12) is adapted to generate a main beam spread (15), wherein a part (19) of the main beam spread (15) is incident on the product rod (11) and another part of the main beam spread (22, 23) runs past the product rod (11) on one or both sides thereof and, after passing the product rod (11), is directed onto the product rod (11) by at least one further light deflecting element (24, 25), wherein the light deflecting elements (14, 24, 25) are arranged in the incident beam path (16) in such a way that the beam spreads (19, 26, 27) incident on the product rod (11) form altogether a closed line of light which runs 360° completely around the product rod (11).

2. Optical measuring device (10) according to claim 1, **characterized in that** the optical measuring device (10) comprises at least one light deflection element (41, 42, 43) between the product rod (11) and at least one of the light-sensitive elements (29, 30) for deflecting at least one outgoing beam path (38-40).

3. Optical measuring device (10) according to one of the preceding claims, **characterized in that** the optical measuring device (10) comprises at least or exactly three incident beam paths (16) arranged around the circumference of the product rod (11).

4. Optical measuring device (10) according to one of the preceding claims, **characterized in that** a collimator lens (17) is arranged in the incident beam path (16).

5. Optical measuring device (10) according to one of the preceding claims, **characterized in that** at least one light deflecting element (41-43; 44-46; 47-49) is arranged in each outgoing beam path (38, 39, 40).

6. Optical measuring device (10) according to one of the preceding claims, **characterized in that** the evaluation device (73) is adapted to determine one or more of the following quality values or features or service data of the product rod (11) from the 3-dimensional surface profile:
- diameter;
- circumference;
- ovality;
- out-of-roundness factor;
- seam location of a wrapping strip;
- standard deviation of one or more of the above parameters;
- profile error;
- Adhesion points of a wrapping strip;
- Adhesion defect of an adhesive seam;
- Adhesions of foreign bodies;
- rod oscillations;
- unstable longitudinal seam of a wrapping strip;
- profile plot;
- 3D plot.

7. Optical measuring device (10) according to one of the preceding claims, **characterized in that** the light-sensitive elements (29-31) are position-sensitive imaging sensors, in particular CMOS sensors, and/or **in that** the incident beam paths (16) are perpendicularly incident on the product rod and/or **in that** the image plane of the light-sensitive elements (29-31) is arranged obliquely to the respective optical axis.

8. Optical measuring device (10) according to one of the preceding claims, **characterized in that** the scanning rate of the measuring device (10) is selected such that the distance, a, between two measuring profiles, P, is smaller than or equal to the shortest segment length in the product rod (11).

9. Optical measuring device (10) according to one of the preceding claims, **characterized in that** each light-sensitive element (29-31) or all light-sensitive elements (29-31) is assigned to a controller (61), in particular an FPGA and/or a microprocessor, for pre-processing, pre-evaluation and/or data compression of the signals from the light-sensitive element (29-31).

10. Optical measuring device (10) according to claim 9, **characterized in that** the data from the controller (61) or all controllers (61) are sent to a main control and/or data aggregation unit (63), in particular an FPGA and/or a microprocessor, for further processing.

11. Measuring module (50, 51) comprising an optical measuring device (10) according to any of the preceding claims and a housing (53) surrounding the measuring device (10) with passage openings (54, 55) for passing the product rod (11) through the measuring module (50, 51).

12. Measuring module (50, 51) according to claim 11, **characterized in that** the distance d of a passage opening to the nearest housing edge (56) is smaller than or equal to half the distance, D, of two product rods (11) to be processed in a two-rod machine.

13. Use of an optical measuring device (10) according to one of claims 1 to 10 for measuring quality values, features and/or service data of individual segments, T1, T2, T3, in endlessly repeating multi-segment rod sections, Sn, of a product rod (11).

14. Method for optical measurement of quality values, features and/or service data of an endlessly processed product rod (11) of the tobacco-processing industry by means of an optical measuring device (10) according to one of the claims 1 to 10, **characterized in that** the measurement takes place synchronously with the division of the product rod (11) into rods, Sn, and/or rod segments, T1, T2, T3, and/or synchronously with the production velocity.

## Revendications

1. Dispositif de mesure optique (10) pour déterminer au moins une caractéristique, une valeur de qualité et/ou des données de service d'un boudin de produit (11) traité sans fin de l'industrie de traitement du tabac sur la base de la triangulation, comprenant :
- une source de lumière (12) pour générer une pluralité de trajets de faisceau incidents (16) qui sont incidents autour de la circonférence du boudin de produit (11) sur la surface de celle-ci ;
- au moins trois éléments photosensibles (29-31) qui sont disposés dans un agencement de triangulation par rapport aux trajets de faisceau incidents (16),
- un dispositif d'évaluation numérique (73) qui est conçu pour déterminer un profil de surface tridimensionnel du boudin de produit (11) à partir des signaux de mesure transmis par les éléments photosensibles (29-31),
dans lequel le dispositif de mesure optique (10) présente au moins un élément de déviation de lumière (14) entre la source de lumière (12) et le boudin de produit (11) pour dévier au moins un trajet de faisceau incident (16), **caractérisé en ce que en ce que** le dispositif de mesure (10) présente exactement une source de lumière (12), dans lequel la source de lumière (12) est conçue pour générer un éventail de rayonnement principal (15), dans lequel une partie (19) de l'éventail de rayonnement principal (15) est incidente sur le boudin de produit (11) et une autre partie de l'éventail de rayonnement principal (22, 23) passe le long du boudin de produit (11) sur un ou deux côtés de celle-ci et, après avoir passé le boudin de produit (11), est dirigée sur le boudin de produit (11) par au moins un autre élément de déviation de lumière (24, 25), dans lequel les éléments de déviation de lumière (14, 24, 25) sont disposés dans le trajet de faisceau incident (16) de telle sorte que les éventails de rayons (19, 26, 27) incidents sur le boudin de produit (11) produisent au total une ligne lumineuse fermée qui fait le tour complet sur 360° du boudin de produit (11).

2. Dispositif de mesure optique (10) selon la revendication 1, **caractérisé en ce que** le dispositif de mesure optique (10) présente au moins un élément de déviation de lumière (41, 42, 43) entre le boudin de produit (11) et au moins un des éléments photosensibles (29, 30) pour dévier au moins un trajet de faisceau sortant (38-40).

3. Dispositif de mesure optique (10) selon l'une des revendications précédentes, **caractérisé en ce que** le dispositif de mesure optique (10) présente au moins ou exactement trois trajets de faisceau incident (16) disposés autour de la circonférence du boudin de produit (11).

4. Dispositif de mesure optique (10) selon l'une des revendications précédentes, **caractérisé en ce qu'**une lentille collimatrice (17) est disposée dans le trajet de faisceau incident (16).

5. Dispositif de mesure optique (10) selon l'une des revendications précédentes, **caractérisé en ce qu'**au moins un élément de déviation de lumière (41-43 ; 44-46 ; 47-49) est disposé dans chaque trajet de faisceau sortant (38, 39, 40).

6. Dispositif de mesure optique (10) selon l'une des revendications précédentes, **caractérisé en ce que** le dispositif d'évaluation (73) est conçu pour déterminer une ou plusieurs des valeurs de qualité, caractéristiques ou données de service suivantes du boudin de produit (11) à partir du profil de surface tridimensionnel :
- diamètre ;
- circonférence ;
- ovalité ;
- facteur de non-circularité ;
- emplacement de suture d'une bande d'enveloppe ;
- écart-type d'une ou plusieurs des grandeurs ci-dessus ;
- erreurs de profil ;
- points de collage d'une bande d'enveloppe ;
- défauts de collage d'une ligne de collage ;
- adhérences de corps étrangers ;
- oscillations du boudin ;
- suture longitudinale instable d'une bande d'enveloppe ;
- tracé du profil ;
- tracé 3D.

7. Dispositif de mesure optique (10) selon l'une des revendications précédentes, **caractérisé en ce que** les éléments photosensibles (29-31) sont des capteurs imageurs sensibles à la position, en particulier des capteurs CMOS, et/ou que les trajets de faisceau incidents (16) sont incidents verticalement sur le boudin de produit et/ou que le plan image des éléments photosensibles (29-31) est disposé obliquement par rapport à l'axe optique respectif.

8. Dispositif de mesure optique (10) selon l'une des revendications précédentes, **caractérisé en ce que** la fréquence d'échantillonnage du dispositif de mesure (10) est choisie de telle sorte que la distance, a, entre deux profils de mesure, P, soit inférieure ou égale à la longueur de segment la plus courte dans le boudin de produit (11).

9. Dispositif de mesure optique (10) selon l'une des revendications précédentes, **caractérisé en ce qu'**un dispositif de commande (61), en particulier un FPGA et/ou un microprocesseur, est associé à chaque élément photosensible (29-31) ou à tous les éléments photosensibles (29-31) pour le prétraitement, la pré-évaluation et/ou la compression de données des signaux de l'élément photosensible (29-31).

10. Dispositif de mesure optique (10) selon la revendication 9, **caractérisé en ce que** les données du dispositif de commande (61) ou de tous les dispositifs de commande (61) sont envoyées à une unité principale de commande et/ou de collecte de données (63), en particulier un FPGA et/ou un microprocesseur, pour la suite du traitement.

11. Module de mesure (50, 51) comprenant un dispositif de mesure optique (10) selon l'une des revendications précédentes et un boîtier (53) entourant le dispositif de mesure (10) et présentant des ouvertures de passage (54, 55) pour faire passer le boudin de produit (11) à travers le module de mesure (50, 51).

12. Module de mesure (50, 51) selon la revendication 11, **caractérisé en ce que** la distance d d'une ouverture de passage au bord de boîtier le plus proche (56) est inférieure ou égale à la moitié de la distance, D, de deux boudins de produit (11) à traiter dans une machine à deux boudins.

13. Utilisation d'un dispositif de mesure optique (10) selon l'une des revendications 1 à 10 pour mesurer des valeurs de qualité, des caractéristiques et/ou des données de service de segments individuels, Tl, T2, T3, dans des parties en forme de tige multi-segments, Sn, se répétant sans fin, d'un boudin de produit (11).

14. Procédé de mesure optique de valeurs de qualité, de caractéristiques et/ou de données de service d'un boudin de produit (11) traité sans fin de l'industrie de traitement du tabac, au moyen d'un dispositif de mesure optique (10) selon l'une des revendications 1 à 10, **caractérisé en ce que** la mesure est effectuée de manière synchrone avec la division du boudin de produit (11) en tiges, Sn, et/ou en segments de tiges, Tl, T2, T3, et/ou de manière synchrone avec la vitesse de production.
